# EUROPÄISCHE PATENTSCHRIFT

(11) **EP 1 786 547 B1**
(45) Veröffentlichungstag und Bekanntmachung des Hinweises auf die Patenterteilung: **13.02.2008**
(21) Anmeldenummer: 04765029.6
(22) Anmeldetag: 10.09.2004
(51) Int. Cl.: B01J 2/16

(54) **VORRICHTUNG ZUM BEHANDELN VON PARTIKELFÖRMIGEM GUT**
DEVICE FOR TREATING PARTICULATE MATERIAL
DISPOSITIF DE TRAITEMENT D'UN PRODUIT PARTICULAIRE

(43) Veröffentlichungstag der Anmeldung: 23.05.2007
(73) Patentinhaber: Hüttlin, Herbert, Dr. h.c., 79539 Lörrach (DE)
(72) Erfinder: Hüttlin, Herbert, Dr. h.c., 79539 Lörrach (DE)
(74) Vertreter: Weller, Wolfgang
(86) Internationale Anmeldenummer: PCT/EP2004/010096
(87) Internationale Veröffentlichungsnummer: WO 2006/027009

(56) Entgegenhaltungen:
- EP-A- 0 407 325
- WO-A-02/100527
- DE-A1- 10 232 863
- DE-B3- 10 248 116

## Beschreibung

Die Erfindung betrifft eine Vorrichtung zum Behandeln von partikelförmigem Gut, mit einer Prozesskammer zum Aufnehmen und zum Behandeln des Gutes, die einen Boden aufweist, der aus mehreren übereinandergelegten, sich einander überlappenden, ringförmigen Leitplatten aufgebaut ist, zwischen denen ringförmige Schlitze ausgebildet sind, über die Prozessluft mit einer im Wesentlichen horizontalen, radial nach außen gerichteten Bewegungskomponente einführbar ist.

Eine derartige Vorrichtung ist beispielsweise aus der DE 102 48 116 B3 bekannt.

Solche bekannten Vorrichtungen dienen dazu, um ein partikelförmiges Gut zu trocknen, zu granulieren oder zu coaten. Ein gasförmiges Medium, sog. Prozessluft, wird über den Boden in die Prozesskammer eingeführt und tritt dabei durch die zahlreichen Schlitze zwischen den sich überlappenden Leitplatten etwa horizontal gerichtet in die Prozesskammer ein. Durch die überlappenden, ringförmigen Leitplatten, zwischen denen zahlreiche Schlitze ausgebildet sind, bildet sich in der Prozesskammer eine von radial innen nach radial außen gerichtete Strömung an Prozessluft aus, die von der Wand der Prozesskammer nach oben umgelenkt wird. Das zu behandelnde Gut wird dabei mitgerissen, fällt aber auf Grund der Schwerkraft mittig nach unten ab und trifft erneut auf das Luftpolster der Prozessluft. Wird der Prozessluft noch eine gewisse umfängliche Komponente auferlegt, bildet sich nach und nach ein toroidal umlaufender Wirbelstromring aus.

Sollen aus staubfeinen Pulvern größere Agglomerate gebildet werden, also soll das Gut granuliert werden, wird dem toroidalen Ring über Düsen ein klebriges Medium zugesprüht. Bei der eingangs erwähnten DE 102 48 116 B3 sind es beispielsweise in der Wand des Behälters, der die Prozesskammer umschließt, eingesteckte, schräg nach oben gerichtete Sprühdüsen.

Beim Coaten soll einem bereits vorhandenen größeren Körper möglichst gleichmäßig eine Überzugschicht aufgebracht, also aufgesprayt werden.

Es sind vielfältige Ausgestaltungen von Düsen bekannt, denen gemein ist, dass ein meist flüssiger oder auch partikelförmiger Behandlungsstoff mittels Sprühluft zu einem feinen Nebel versprüht wird. Dazu ist beispielsweise bekannt geworden, aus einer schlitzförmigen Düsenmündung die Flüssigkeit unter hohem Druck auszutreiben und durch Sprühluftmündungen, sei es auf einer Seite oder auf beiden Seiten des Flüssigkeitsspaltes zu versprühen.

Aus der DE 102 32 863 A1 ist eine Zerstäubungsdüse bekannt, die im Querschnitt ringförmige Strömungskanäle aufweist. Je nach Sprühwinkel und Umschlingungswinkel entstehen strahlförmige, kegelförmige oder mehr oder weniger planebene Sprühfladen. Bei einem Sprühwinkel von 180° und einem Umschlingungswinkel von 360° entsteht eine nahezu planebene Sprühflade.

Es ist ein Bestreben in dieser Technologie, die verbreitet im pharmazeutischen Anwendungsbereich eingesetzt wird, ein möglichst gleichmäßiges Ergebnis zu erzielen, d.h. Granulate mit einer sehr schmalen Korngrößenverteilung zu erzielen, beim Coaten eine möglichst gleichmäßige, d.h. insbesondere gleichdicke Überzugschicht bei allen Teilchen der Charge zu erzielen, die in der Apparatur enthalten sind. Ein großes Problem besteht darin, dass unkontrolliert umherirrende Gutteilchen, die mit der feuchten und meist klebrigen Sprühflüssigkeit benetzt sind, sich zu ungewollten Agglomeraten aneinander haften.

Daher sind genau definierte Strömungsverhältnisse in dem toroidal rotierenden Gutband erwünscht, die ein optimales Behandlungsergebnis erlauben. Insbesondere ist gewünscht, dass die Teilchen nach dem Besprühen eine Flugbahn einnehmen, in der sie sich möglichst voneinander wegbewegen und nicht aufeinander zu, um unerwünschte Agglomerate zu verhindern.

Es ist daher Aufgabe der vorliegenden Erfindung, für eine Verbesserung von derartigen Vorrichtungen zur Behandlung von partikelförmigem Gut dahin zu sorgen, dass ein harmonischer Bewegungsablauf mit einem optimalen Behandlungsergebnis erzielt werden kann.

Erfindungsgemäß wird die Aufgabe dadurch gelöst, dass bei einer Vorrichtung der eingangs genannten Art mittig, im Boden eine Ringspaltdüse angeordnet ist, deren Mündung derart ausgebildet ist, dass eine planebene Sprühflade versprühbar ist, die etwa parallel zur Bodenebene verläuft.

Die Kombination einer derartigen Ringspaltdüse mit einem Boden aus ringförmigen Leitplatten mit einer von innen nach außen gerichteten Strömung von Prozessluft führt nun überraschenderweise zu einer besonders harmonischen Luft- und Gutführung. Die durch die ringförmigen Schlitze austretende Prozessluft bildet ein sich radial von innen nach außen über den Boden gleitendes Luftpolster, das das zu behandelnde Gut radial nach außen in einen immer größeren zur Verfügung stehenden Raum führt, die Teilchen sich also zunächst voneinander wegbewegen.

Die an der Wand hochgeleitete Prozessluft nimmt die zu behandelnden Gutteilchen vertikal nach oben mit. Diese trennen sich von der abströmenden Prozessluft, werden radial nach innen gerichtet auf das Zentrum hin bewegt und fallen auf Grund der Schwerkraft etwa mittig im Zentrum nach unten auf das Prozessluftpolster aus durch den Boden hindurchtretender Prozessluft herab. Durch das mittige Vorsehen der Ringspaltdüse mit der von dieser ausgesprühten planebenen Sprühflade kann das herabfallende Gut gleichmäßig besprüht und unmittelbar anschließend radial nach außen strahlenförmig, also voneinander wegbewegt werden. Die Gutteilchen werden also ganz gezielt beim vertikalen Herabfallen von der Sprühflade besprüht, von dem Luftkissen der Prozessluft abgefedert und radial nach außen bewegt. Nach Verlassen der Sprühflade steht der weitere horizontal radial nach außen gerichtete Pfad mit der anschließenden vertikal nach oben aufsteigenden Bewegung und die wieder zum Zentrum zurückfallende Bewegung dazu zur Verfügung, um durch die Prozessluft die besprühten Teilchen zu trocknen und entsprechend zu verfestigen, bevor sie wieder erneut auf die Sprühflade treffen. Durch die 360°-Umschlingung der Sprühflade kann das gesamte mittig herabfallende Gut gleichmäßig von der Sprühflüssigkeit besprüht werden.

Es wurde nun in überraschender Weise festgestellt, dass durch diese Kombination eine harmonische gleichmäßige optimale Behandlung des Gutes erzielt werden kann. Die Ringspaltdüse arbeitet "mitschiff" und "unterbett". Das auf die Sprühflade herabfallende Gut wird vom Prozessluftpolster aufgenommen und wird besonders harmonisch und gleichmäßig behandelt.

Selbst bei sehr großen Versuchsansätzen, bis zu 650 kg, wurde eine Vollkommenheit eines Granulier-, Coating- und Trocknungsprozesses erzielt. Das bodenseitige Luftkissen hält die Bodenoberfläche vollkommen frei von versprühtem Stoff, d.h. es wird der gesamte versprühte Stoff in das Gut eingetragen, so dass keine Sprühverluste auftreten, was insbesondere im pharmazeutischen Bereich äußerst wichtig ist.

In einer weiteren Ausgestaltung der Erfindung sind zwischen Mündung der Ringspaltdüse und dem darunter liegenden Boden Austrittsöffnungen für Stützluft vorgesehen, um an der Unterseite der Sprühflade ein Stützpolster zu bewerkstelligen.

Es ist allgemein bekannt, dass im unmittelbaren Bereich einer Düsenmündung ein gewisser Unterdruck entsteht, der dazu führt, dass neben der Düsenmündung Materialanhäufungen entstehen. Bei der eingangs erwähnten Sprühflade ist auf deren Oberseite darin kein Problem zu sehen, da ja dort zentral mittig die Gutteilchen herabfallen und horizontal weggeführt werden. An der Unterseite der Sprühflade könnten aber solche Unterdruckbereiche nach und nach Teilchenansammlungen verursachen. Durch Vorsehen der zusätzlichen Austrittsöffnungen wird eine Stützluft geschaffen, die diesen Bereich an der Unterseite im Bereich der Mündung der Ringspaltdüse "freibläst". Ein weiterer zusätzlicher Effekt ist, dass die Stützluft in der Tat die versprühte planebene Sprühflade an ihrer Unterseite stützen kann, also verhindert, dass die Sprühflade auf Grund der Schwerkraft oder auf Grund des sich im Querschnitt ausbildenden Sprühkegels unerwünscht nach unten bewegt. Dadurch wird ausgeschlossen, dass Sprühverluste entstehen bzw. dass sich klebrige Materialien auf der Oberseite des Bodens absetzen.

In einer weiteren Ausgestaltung der Erfindung wird die Stützluft von der Ringspaltdüse selbst und/oder durch Prozessluft bereitgestellt.

Diese Maßnahmen lassen sehr variable Ausgestaltungen der Bewerkstelligung der Stützluft zu. Es können an der Ringspaltdüse selbst Austrittsöffnungen vorgesehen sein, über die ein Teil der Sprühluft austritt, um zur Ausbildung der Stützluft beizutragen. Zusätzlich oder alternativ können Teile der Prozessluft, die durch den Boden strömt, in Richtung der Unterseite der Sprühflade geführt werden und dadurch zur Ausbildung der Stützluft beitragen.

In einer weiteren Ausgestaltung der Erfindung weist die Ringspaltdüse einen etwa kegelförmigen Kopf auf, und die Mündung verläuft entlang einer kreisförmigen Kegelschnittfläche.

Diese Maßnahme hat den Vorteil, dass durch den Kegel die sich vertikal von oben nach unten bewegenden Gutteilchen gleichmäßig, sanft und gezielt auf die Sprühflade zugeführt werden, die vom kreisförmigen Sprühspalt im unteren Ende des Kegels versprüht wird.

In einer weiteren Ausgestaltung der Erfindung ist im Bereich zwischen Mündung und darunter liegendem Boden eine kegelstumpfförmige Wand vorgesehen, die Durchtrittsöffnungen für Stützluft aufweist.

Diese Maßnahme hat den Vorteil, dass die zuvor erwähnte harmonische Umlenkbewegung durch die Fortsetzung über den Kegelstumpf aufrecht erhalten wird und in diesem Bereich Stützluft durch die Durchtrittsöffnungen austreten kann und für die entsprechende Stützung an der Unterseite der Sprühflade sorgt.

In einer weiteren Ausgestaltung der Erfindung ist zwischen der Unterseite der kegelstumpfförmigen Wand ein ringförmiger Schlitz zum Durchtritt von Prozessluft ausgebildet.

Diese Maßnahme hat den Vorteil, dass der Übergang der Gutteilchen auf das Luftpolster des Bodens besonders gut gesteuert werden kann und unmittelbar im Bereich unter der Düse beginnend gezielt durchgeführt werden kann.

In einer weiteren Ausgestaltung der Erfindung ist über der Ringspaltdüse eine Mündung einer Zuführung eines Stoffes angeordnet.

Es wurde festgestellt, dass auf Grund der harmonischen Strömung der gewählten Kombination von Ringspalten und Ringspaltdüse ein zusätzlicher Stoff sehr effektiv zugeführt werden kann. Es ist daher möglich, beispielsweise ein Pulver direkt zentral mittig bei der Ausbildung der Sprühflade auf diese zuzuführen, so dass ein Pulver auf die durch die Düse klebrig gemachte Oberfläche des zu behandelnden Gutes fest anhaftend aufgelegt werden kann. Dadurch kann eine rasche Zunahme der Schichtdicke beim Coaten erzielt werden. Dies ist nicht der einzige Vorteil. Ein weiterer erheblicher Vorteil besteht darin, dass man beispielsweise einen Wirkstoff zuführen kann, der feuchtigkeitsempfindlich ist und deswegen nicht in einer Suspension oder in einer Lösung verarbeitet und durch die Ringspaltdüse versprüht werden kann. In diesem Fall versprüht die Ringspaltdüse nur das "klebrige" Mittel, der eigentliche Wirkstoff wird als Pulver zentral mittig zugeführt. Diese weitere Zuführung, die selbstverständlich strömungstechnisch ein zusätzlicher zu berücksichtigender Parameter ist, kann deswegen durchgeführt werden, da durch die zuvor erwähnte Kombination eine sehr definierte und harmonische Strömung erzielt werden kann.

In einer weiteren Ausgestaltung der Erfindung sind zwischen den ringförmigen Leitplatten Leitelemente angeordnet, die der durchtretenden Prozessluft noch zusätzlich eine umfängliche Strömungskomponente auferlegen.

Diese an sich bekannte Maßnahme hat den Vorteil, dass durch diese Leitelemente die entsprechende umfängliche Bewegungskomponente auferlegt werden kann, um das toroidal drehende Band an gleichmäßig verwirbelten Gutteilchen auszubilden, die dadurch gleichmäßig auf die planebene Sprühflade auftreffen können.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend an Hand einiger ausgewählter Ausführungsbeispiele in Zusammenhang mit den beiliegenden Zeichnungen näher beschrieben. Es zeigen:
- Fig. 1: stark schematisiert einen diametralen Querschnitt durch eine Vorrichtung zum Behandeln von partikelförmigem Gut und
- Fig. 2: einen entsprechenden Schnitt mit einer zusätzlichen Zuführung für einen weiteren Stoff.

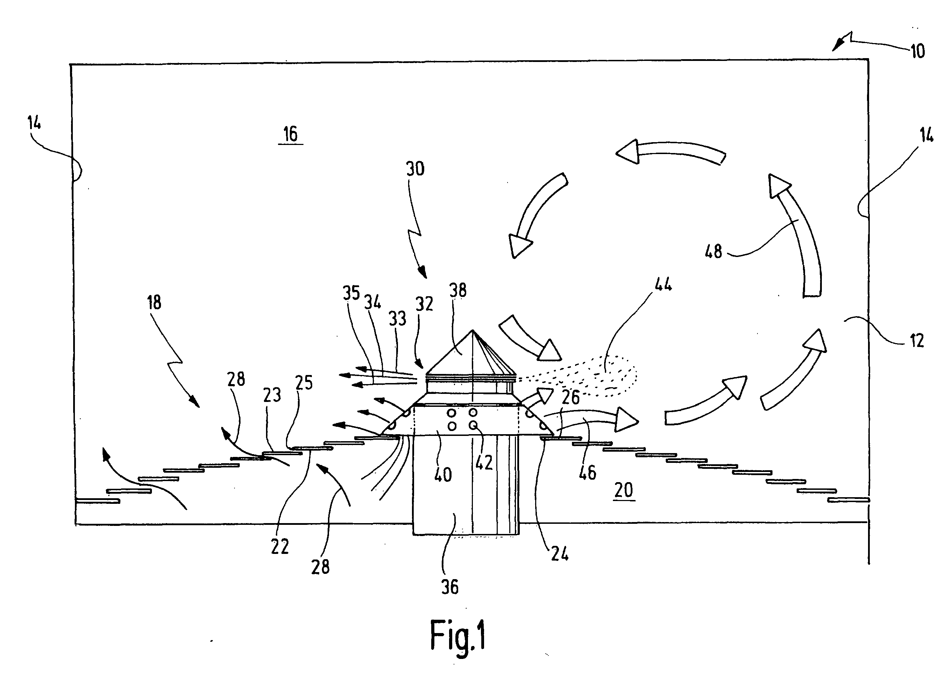

Eine in Fig. 1 dargestellte Vorrichtung zum Behandeln von partikelförmigem Gut ist in ihrer Gesamtheit mit der Bezugsziffer 10 versehen.

Die Vorrichtung 10 weist einen Behälter 12 mit einer hochstehenden zylindrischen Wand 14 auf. Diese Wand 14 umschließt eine entsprechende Prozesskammer 16.

Die Prozesskammer 16 weist einen Boden 18 auf, unter dem sich eine Anströmkammer 20 befindet.

Der Boden 18 ist, wie dies beispielsweise aus der eingangs erwähnten DE 192 48 116 B3 bekannt ist, aus insgesamt zehn ringförmigen übereinander gelegenen Leitplatten zusammengesetzt. Die zehn Leitplatten sind so übereinandergesetzt, dass eine äußerste mit der Wand 12 verbundene Ringplatte eine unterste bildet, auf der dann die weiteren neun inneren Ringplatten, die die jeweils darunter liegende teilweise überlappen, aufgelegt sind.

Der Übersicht halber sind nur einige der Leitplatten mit Bezugsziffern versehen, beispielsweise die beiden übereinander liegenden Leitplatten 22 und 23. Durch diese Übereinanderlegung und Beabstandung ist zwischen zwei Leitplatten jeweils ein ringförmiger Schlitz 25 ausgebildet, durch den Prozessluft 28 mit einer im Wesentlichen horizontal gerichteten Bewegungskomponente durch den Boden 18 hindurchtreten kann, wie das ja an sich bekannt ist. In der mittigen obersten inneren Leitplatte 24 ist in deren zentralen Öffnung von unten eine Ringspaltdüse 30 eingesetzt. Die Ringspaltdüse 30 weist eine Mündung 32 auf, die insgesamt drei Mündungsspälte 33, 34 und 35 aufweist. Alle drei Mündungsspälte 33, 34 und 35 sind so ausgerichtet, dass sie etwa parallel zum Boden 30, also etwa horizontal mit einem Umschlingungswinkel von 360° aussprühen. Über den oberen Spalt 33 sowie den unteren Spalt 35 wird Sprühluft ausgepresst, durch den mittleren Spalt 34 die zu versprühende Flüssigkeit.

Die Ringspaltdüse 30 weist einen stabförmigen Körper 36 auf, der nach unten fortreicht und die entsprechenden Kanäle und Zuführleitungen enthält, wie das an sich bekannt ist. Die Ringspaltdüse kann beispielsweise wie die Zerstäubungsdüse aus der DE 102 32 863 A1 ausgebildet sein.

Diese Ringspaltdüse kann beispielsweise mit einem sog. rotativen Ringspalt ausgebildet sein, bei dem sich Wände des Kanals, durch den die Flüssigkeit ausgesprüht wird, relativ zueinander drehen, um Verstopfungen durch Verklumpungen auszuschließen, so dass über den ganzen Umschlingungswinkel von 360° gleichmäßig aus dem Spalt 34 ausgesprüht werden kann. Im Hinblick auf die Längsachse des Körpers 36 der Ringspaltdüse 30 gesehen liegt somit ein Sprühwinkel von 180° vor.

Die Ringspaltdüse 30 weist über der Mündung 32 einen kegelförmigen Kopf 38 auf.

Im Bereich unter der Mündung 32 ist eine kegelstumpfförmige Wand 40 vorhanden, die zahlreiche Öffnungen 42 aufweist. Wie aus Fig. 1 zu erkennen, ruht die Unterseite der kegelstumpfförmigen Wand 40 auf der innersten Leitplatte 24, und zwar derart, dass zwischen der Unterseite der kegelstumpfförmigen Wand 40 und der darunter liegenden mit dieser teilweise überlappenden Leitplatte 24 ein Schlitz 26 ausgebildet ist, durch den Prozessluft hindurchtreten kann.

Auf der rechten Hälfte von Fig. 1 ist dargestellt, welche Strömungsverhältnisse sich in eingelaufenem Zustand ausbilden.

Aus der Mündung 32 tritt eine planebene Sprühflade 44 aus. Durch die durch die Öffnungen 42 in der kegelstumpfförmigen Wand 40 durchtretende Luft, die beispielsweise Prozessluft sein kann, bildet sich an der Unterseite der Sprühflade 44 eine Stützluftströmung 46 aus. Durch die durch die zahlreichen Schlitze 25, 26 hindurchtretende Prozessluft 28 bildet sich eine radiale Strömung in Richtung der Wand 14 aus, von der diese nach oben umgelenkt wird, wie das durch einen Pfeil 48 dargestellt ist. Die Prozessluft und das zu behandelnde Gut trennen sich nun voneinander, die Prozessluft wird durch Auslässe abgeführt, das verwirbelte Gut wird radial nach innen bewegt und fällt auf Grund der Schwerkraft in Richtung des kegelförmigen Kopfes 38 der Ringspaltdüse 30 vertikal nach unten ab. Dort wird das herabfallende Gut sanft umgeleitet und auf die Oberseite der Sprühflade 44 geleitet und dort mit dem versprühten Medium behandelt. Die besprühten Teilchen in der Sprühflade bewegen sich voneinander weg, da ja nach Verlassen der ringförmigen Mündung 32 den Teilchen ein umfänglich größerer Raum zur Verfügung steht. Im Bereich der Sprühflade treffen die zu behandelnden Gutteilchen mit Flüssigkeitsteilchen zusammen und werden, in dieser Bewegungsrichtung bleibend, voneinander wegbewegt, dabei sehr gleichmäßig und harmonisch mit Prozessluft behandelt, also getrocknet.

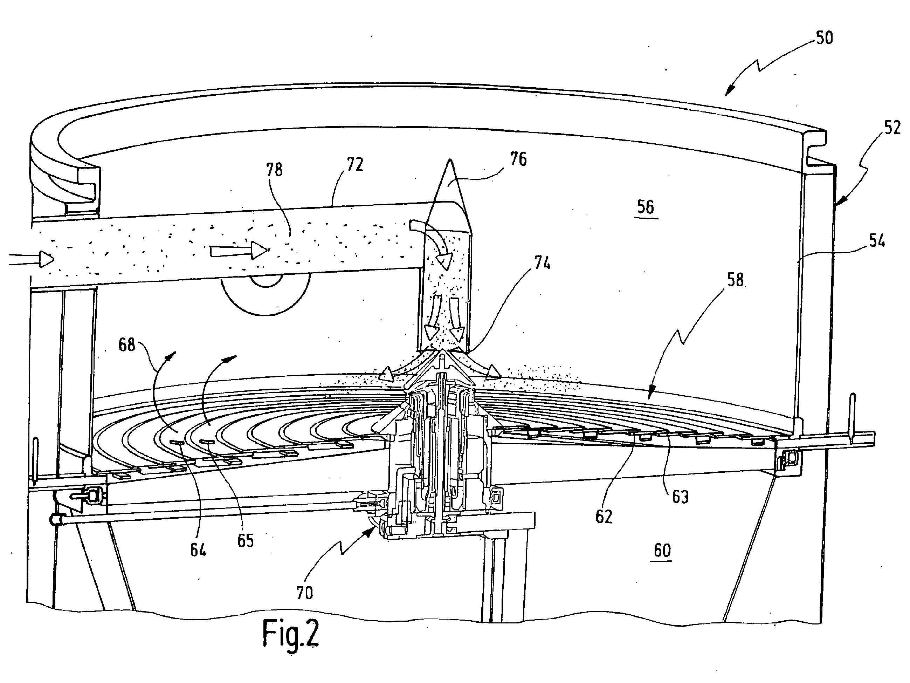

In Fig. 2 ist ein dem Schnitt von Fig. 1 vergleichbarer Schnitt in Perspektive dargestellt, wobei die dort gezeigte Vorrichtung in ihrer Gesamtheit mit der Bezugsziffer 50 versehen ist. Auch hier ist ein Behälter 52 vorhanden, der eine zylindrisch hochstehende Wand 54 aufweist, in der eine Prozesskammer 56 definiert ist. Der Boden 58 ist wie zuvor in Zusammenhang mit Fig. 1 beschrieben aus zehn entsprechend übereinander gelegten Leitplatten zusammengesetzt, wo hier beispielsweise nur die beiden Leitplatten 62 und 63 benannt sind. Unter dem Boden 58 befindet sich dann wieder die Anströmkammer 60.

Hier ist dargestellt, dass zwischen den Leitplatten Leitelemente 64 und 65 angeordnet sind, die dazu führen, dass die zwischen den Leitplatten 62 und 63 durchtretende Prozessluft nicht nur exakt radial nach außen strömt, sondern dass dieser eine gewisse umfängliche Bewegungskomponente auferlegt wird, wie das durch den Pfeil 68 dargestellt ist.

Auch hier ist wieder mittig eine entsprechende wie zuvor beschriebene Ringspaltdüse 70 angeordnet. Zentral mittig über der Ringspaltdüse ist eine Zuführung 72 angeordnet, beispielsweise ein seitlich zugeführtes Rohr, wobei die Mündung 74 der Zuführung 72 exakt koaxial zentrisch über der Ringspaltdüse 70 liegt. Die Lage der Mündung kann in der Höhe verstellt werden.

Dadurch wird beispielsweise möglich, einen Feststoff in Form eines Pulvers 78 auf die Oberseite der von der Ringspaltdüse 70 versprühten planebenen Sprühflade zu verbringen.

In beiden genannten Ausgestaltungen ist die Ringspaltdüse 30 bzw. 70 so ausgeführt, dass sie selbst im Betrieb von unten vom Boden abgezogen werden kann, beispielsweise um auf Funktionsstörung oder dgl. zu überprüfen. Vor dem Abziehen wird selbstverständlich die Zufuhr der Sprühflüssigkeit abgestellt, es ist aber weiterhin möglich, in der Vorrichtung 10 bzw. 50 das Gut umzuwälzen, da sich in dem zentralen mittigen Loch eine mittige nach oben steigende Prozessluftsäule ausbildet, so dass ausgeschlossen ist, dass durch diese Öffnung Gutteilchen hindurchfallen. Dies ist wieder eine Folge der ganz definierten harmonischen Verwirbelungsbewegung im Rahmen des toroidal rotierenden Bandes.

## Patentansprüche

1. Vorrichtung zum Behandeln von partikelförmigem Gut, mit einer Prozesskammer (16, 56) zum Aufnehmen und Behandeln des Gutes, die einen Boden (18, 58) aufweist, der aus mehreren, übereinandergelegten, sich einander überlappenden, ringförmigen Leitplatten (22-24; 62, 63) aufgebaut ist, zwischen denen ringförmige Schlitze (25, 26) ausgebildet sind, über die Prozessluft (28, 68) mit einer im Wesentlichen horizontalen, radial nach außen gerichteten Bewegungskomponente einführbar ist, wobei mittig, im Boden (18, 58) eine Ringspaltdüse (30, 70) angeordnet ist, deren Mündung (32) derart ausgebildet ist, dass eine planebene Sprühflade (44) versprühbar ist, die etwa parallel zur Bodenebene verläuft.

2. Vorrichtung nach Anspruch 1, **dadurch gekennzeichnet, dass** zwischen Mündung (32) der Ringspaltdüse (30, 70) und dem darunter liegenden Boden (18, 58) Austrittsöffnungen (42) für Stützluft (46) vorgesehen sind, um an der Unterseite der Sprühflade (44) ein Stützpolster zu bewerkstelligen.

3. Vorrichtung nach Anspruch 2, **dadurch gekennzeichnet, dass** die Stützluft (46) von der Ringspaltdüse (30, 70) selbst und/oder durch Prozessluft (28, 68) bereitstellbar ist.

4. Vorrichtung nach einem der Ansprüche 1 bis 3, **dadurch gekennzeichnet, dass** die Ringspaltdüse (30, 70) einen etwa kegelförmigen Kopf (38) aufweist, und dass die Mündung (32) entlang einer kreisförmigen Kegelschnittumfangslinie verläuft.

5. Vorrichtung nach Anspruch 4, **dadurch gekennzeichnet, dass** im Bereich zwischen Mündung (32) und dem darunter liegenden Boden (18, 58) eine kegelstumpfförmige Wand (40) steht, die Durchtrittsöffnungen (42) für die Stützluft (46) aufweist.

6. Vorrichtung nach Anspruch 5, **dadurch gekennzeichnet, dass** zwischen der Unterseite der kegelstumpfförmigen Wand (40) ein ringförmiger Schlitz (26) zum Durchtritt von Prozessluft (68) ausgebildet ist.

7. Vorrichtung nach einem der Ansprüche 1 bis 6, **dadurch gekennzeichnet, dass** über der Ringspaltdüse (70) die Mündung (74) einer Zuführung (72) für einen Stoff (78) angeordnet ist.

8. Vorrichtung nach Anspruch 7, **dadurch gekennzeichnet, dass** die Lage der Mündung (74) in der Höhe verstellbar ist.

9. Vorrichtung nach einem der Ansprüche 1 bis 8, **dadurch gekennzeichnet, dass** zwischen den ringförmigen Leitplatten (62, 63) Leitelemente (64, 65) angeordnet sind, die der durchtretenden Prozessluft (68) noch zusätzlich eine umfängliche Strömungskomponente auferlegen.

## Claims

1. Device for treating particulate material, having a process chamber (16, 56) which is intended for receiving and treating the material and has a bottom (18, 58) which is composed of a plurality of overlapping annular guide plates (22-24; 62, 63) which are placed one above the other and between which annular slots (25, 26) are formed, via which process air (28, 68) having an essentially horizontal component motion directed radially outward can be introduced, an annular-gap nozzle (30, 70) being arranged centrally in the bottom (18, 58), the orifice (32) of this annular-gap nozzle (30, 70) being designed in such a way that a planar spray pancake (44) which runs approximately parallel to the bottom plane can be sprayed.

2. Device of claim 1, **characterized in that** discharge openings (42) for support air (46) are provided between the orifice (32) of the annular-gap nozzle (30, 70) and the bottom (18, 58) lying underneath in order to effect a support cushion on the underside of the spray pancake (44).

3. Device of claim 2, **characterized in that** the support air (46) can be provided from the annular-gap nozzle (30, 70) itself and/or by process air (28, 68).

4. Device of anyone of claims 1 to 3, **characterized in that** the annular-gap nozzle (30, 70) has an approximately conical head (38), and **in that** the orifice (32) runs along a circular circumferential line of a conic section.

5. Device of claim 4, **characterized in that** there is a frustoconical wall (40) in the region between the orifice (32) and the bottom (18, 58) lying underneath, this frustoconical wall (40) having through-openings (42) for the support air (46).

6. Device of claim 5, **characterized in that** an annular slot (26) for process air (68) to pass through is formed between the underside of the frustoconical wall (40).

7. Device of anyone of claims 1 to 6, **characterized in that** the orifice (74) of a feed (72) for a substance (78) is arranged above the annular-gap nozzle (70).

8. Device of claim 7, **characterized in that** the position of the orifice (74) can be adjusted vertically.

9. Device of anyone of claims 1 to 8, **characterized in that** guide elements (64, 65) are arranged between the annular guide plates (62, 63), these guide elements (64, 65) additionally imposing an circumferential flow component on the process air (68) passing through.

## Revendications

1. Dispositif de traitement d'une matière particulaire comprenant une chambre de processus (16, 56) qui est destinée à recevoir et traiter la matière et qui comporte un fond (18, 58) qui est composé de plusieurs plaques-guides annulaires (22-24 ; 62, 63) qui sont disposées les unes au-dessus des autres en se chevauchant mutuellement, entre lesquelles sont formées des fentes annulaires (25, 26) par lesquelles peut être introduit de l'air de processus (28, 68) ayant une composante de mouvement essentiellement horizontale dirigée radialement vers l'extérieur, une buse à fente annulaire (30, 70) étant disposée centralement dans le fond (18, 58), dont l'orifice (32) est conçu de manière qu'une galette de pulvérisation plane (44), qui s'étend à peu près parallèlement au plan du fond, puisse être pulvérisée.

2. Dispositif selon la revendication 1, **caractérisé en ce que** des ouvertures de sortie (42) pour de l'air de soutien (46) sont prévues entre l'orifice (32) de la buse à fente annulaire (30, 70) et le fond (18) situé en dessous pour réaliser un coussin de soutien sur la face inférieure de la galette de pulvérisation (44).

3. Dispositif selon la revendication 2, **caractérisé en ce que** l'air de soutien (46) peut être fourni par la buse à fente annulaire (30, 70) elle-même et/ou par l'air de processus (28, 68).

4. Dispositif selon l'une des revendications 1 à 3, **caractérisé en ce que** la buse à fente annulaire (30, 70) présente une tête (38) approximativement conique et que l'orifice (32) s'étend le long d'une ligne circonférentielle circulaire de la section conique.

5. Dispositif selon la revendication 4, **caractérisé en ce qu'**il est prévu une paroi tronconique (40) dans la région située entre l'orifice (32) et le fond (18, 58) situé en dessous, laquelle présente des ouvertures de passage (42) pour de l'air de soutien (46).

6. Dispositif selon la revendication 5, **caractérisé en ce qu'**une fente annulaire (26) permettant le passage d'air de processus (68) est formée entre la face inférieure de la paroi tronconique (40).

7. Dispositif selon l'une des revendications 1 à 6, **caractérisé en ce que** l'orifice (74) d'une arrivée (72) d'une substance (78) est disposée au-dessus de la buse à fente annulaire (70).

8. Dispositif selon la revendication 7, **caractérisé en ce que** la position de l'orifice (74) est réglable en hauteur.

9. Dispositif selon l'une des revendications 1 à 8, **caractérisé en ce que** des éléments de guidage (64, 65) sont disposés entre les plaques-guides annulaires (62, 63), lesquels imposent à l'air de processus (68) traversant une composante d'écoulement circonférentielle supplémentaire.
